# EUROPEAN PATENT SPECIFICATION

(11) **EP 2 505 463 B1**
(45) Date of publication and mention of the grant of the patent: **04.05.2016**
(21) Application number: 12161998.5
(22) Date of filing: 29.03.2012
(51) Int. Cl.: B62H 3/10, B62J 11/02, B62H 3/00, B60R 9/10, F04B 33/00

(54) **Multi-function bycicle accessory**
Fahrradzubehör
Accessoire de Bicyclette

(30) Priority: 30.03.2011 IT FI20110019 U
(43) Date of publication of application: 03.10.2012
(73) Proprietor: Innocenti, Roberto, 51018 Pieve a Nievole (Pistoia) (IT); Borsetto, Giovanni, 56035 Lari (PI) (IT)
(72) Inventor: Innocenti, Roberto, 51018 Pieve a Nievole (Pistoia) (IT)
(74) Representative: Soldatini, Andrea

(56) References cited:
- DE-C- 580 485
- DE-U1-202010 012 299
- FR-A1- 2 409 173
- US-A- 5 497 967
- US-A1- 2010 059 563

## Description

The present invention concerns the field of bicycle accessories in general and, in particular, regards a multi-function accessory useful in different transport and maintenance circumstances of a bicycle, in particular, but not limited to, a bicycle with quick release wheels as those destined to recreational or competitive sports activities.

As known, there are bicycle transport systems which provide for the placing of the bicycle frame in a specifically conceived bag, duffel or suitcase after detaching the wheels and removing the saddle and handlebars set. The result is a compact baggage relatively handy to transport.

Although the quick release and hooking systems of the wheels and of the other components, which are now common in particular in bicycles of a certain value, make the disassembly and assembly operations easier, these remain rather difficult, at least when they have to be carried out by one person only, who finds himself/herself unable to make the requested interventions and at the same time hold or even lift the bicycle up (a position which would make the above interventions easier). Moreover, the arrangement of the various parts in the bag or duffel is problematic since it can hinder the easy handling of the baggage and damage the components.

Known accessories for supporting and transporting a bicycle on a vehicle and having a general configuration according to the preamble of claim 1 are disclosed in US2010/059563.

The object of the present invention is to provide an accessory capable of overcoming the above mentioned disadvantages, making the disassembly, assembly and subsequent maintenance operations of the bicycle remarkably easier, also assisting its more rational arrangement, once disassembled, inside a carrying bag.

According to the present invention, such object is attained by a multi-function bicycle accessory, the bicycle comprising a frame with a connection tube for a bottom bracket and a fork with a connection terminal for connecting to the front wheel, the accessory being characterized by the fact that it comprises: an elongated body extensible along a longitudinal axis, comprising a first and a second end mutually movable in an adjustable manner; at said first and at said second end of said body, respectively first and second reversible connection means for connecting respectively to said fork terminal and to said bottom bracket tube, said second connection means defining a connection axis adapted to coincide or to be arranged parallel to the rotation axis of the bottom bracket when said second end is connected to said tube; and, at said second end, extractable means associated to said body and adapted to keep said second connection means uplifted with respect to the ground plane when said first end of said body is placed on the same ground plane.

The extractable means comprise a kick-stand pivoted with respect to said body around a crosswise pivotal axis parallel to said connection axis of said second connection means, between a pulled-in position towards said body and an open position of maximum projection.

In such a way, in both positions of the kick-stand, the bicycle frame can be maintained in an upright position to make the assembly and disassembly operations of the bicycle easier, in particular in relation to the back wheel, the handlebars and the saddle. In the pulled-in position, the kick-stand keeps in any case the back side of the frame uplifted, to let the bottom bracket and the relating pedals freely rotate, at least for a given angle. In such a position of minimum encumbrance, the accessory will support the frame also inside the suitcase and when it is taken out from it, thus also contributing to create the conditions for a more rational arrangement of the detached components.

When the kick-stand is in the open position, preferably at right angles with the body, the lifting given to the back side of the bicycle will be such as to make the bottom bracket completely turn, thus allowing to easily work on the back wheel for the assembly and disassembly operations, leaving the user's hands completely free. In such a position, the accessory will also advantageously allow to perform the maintenance operations of the whole transmission and gears group of the bicycle, independently from the transport needs.

According to an even more advantageous embodiment, the body of the accessory is a piston pump with manual drive, so that the user will directly and with no additional accessories have the possibility of inflating the tires when restoring the bicycle in use conditions after the transport.

The characteristics multi-function accessory according to the present invention will become apparent from the following description of an embodiment thereof, given as a non-limiting example with reference to the attached drawings, wherein:
- figure 1 is a side view of the accessory according to the invention, in a rest configuration and with the body in a retracted position;
- figure 2 is a top view of the accessory of figure 1;
- figure 3 is a side view similar to the one in figure 1, with the body of the accessory in a partially extended position to be used as a bicycle support;
- figure 4 is again a side view of the accessory, again with the body in a retracted position and the kick-stand in an open position;
- figure 5 is a side view of the accessory with the body in vertical elevation, positioned to be used as pump;
- figures from 6a to 6e show various use configurations of the accessory in use with the bicycle; and
- figures from 7a to 9 respectively show different variant embodiments of the accessory outside the scope of the present invention.

With reference for the time being to figures from 1 to 5, an accessory according to the present invention comprises a body 1 having an elongated structure according to an axis X, preferably and typically a shaft with a cylindrical section. The body 1 is extensible along said axis, thus comprising a fixed portion 11 and a stem 12 extensible, e.g. telescopically, from the fixed portion 11. Advantageously, the whole body 1 consists in practice of a piston pump, with manual drive, referable to the bicycle tire inflation type, well-known in the field. The fixed portion 11 will therefore be made by the pump cylinder and the stem 12 by the piston, and for this purpose provided with a grip 13 at the external end.

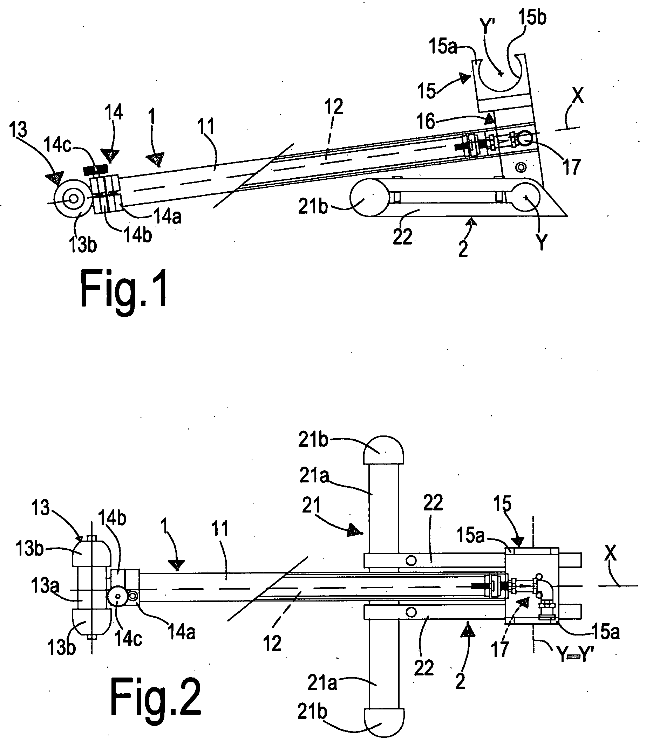

The mutual sliding between stem 12 and cylinder or fixed portion 11 can be hindered and locked, at an intermediate desired position between the two run ends (stem completely retracted as in figure 1 or completely extended) but also at the same run end positions, through a screw clamp 14 which can be driven through a small turning knob 14c. The clamp, according to a configuration which is obvious in itself, can have two portions 14a, 14b, one irreversibly tightened to the cylinder 11 and one immediately adjacent to it, integral with the first portion and adapted to radially tighten on the stem 12 due to the screwing of a tangentially penetrated screw the head of which is represented by the knob 14c.

The already mentioned grip 13 is in substance associated to a first end of the body 1 and at the same times defines (first) connection means for connecting to the terminal of a bicycle fork, once the front wheel has been removed. In fact, the grip 13 provides for this purpose a crossbeam arranged in a T fashion with respect to the stem 12 and having a central cylindrical portion 13a sized as to perfectly insert in the seats the fork provides for the engagement with the hub of the front wheel. The central portion 13a is delimited between two mushroom-like projections 13b which, as better described hereafter, provide for points of support of the accessory on the ground.

The opposite end, or second end of the body 1, defined on the cylinder 11, besides presenting (in the embodiment wherein the body itself is made by a pump) pressurized air delivery means 17, is associated to second connection means for connecting to the tube of the frame which, in the bicycle, supports the turning axle of the bottom bracket. Said second connection means provide for a U-shaped bracket 15 the two arms 15a of which rise crosswise with respect to the axis X and are shaped so as to define respective seats 15b having a circular profile which firmly house the above mentioned frame tube of the bicycle. Such seats 15b therefore define a connection axis Y' adapted to coincide with the rotation axis of the bicycle movement. The engagement between the seats 15b and the tube can be of simple support or made more stable by way of a certain forcing obtained for elastic deformation of the arms 15a, suitably shaped.

The bracket 15 projects from the end of a base 16, in its turn developing crosswise with respect to the cylinder 11 and at the opposite end of which extractable means are arranged, such as a kick-stand 2, pivoting around a crosswise axis Y parallel to the connection axis defined by the seats 15b and, therefore, adapted to be parallel, when the tube of the bicycle frame is connected to the bracket 15, to the rotation axis Y' of the bottom bracket of the bicycle. In practice, the pivotal axis Y and the connection axis Y' are arranged on opposite sides, in a substantially symmetrical manner, with respect to the longitudinal axis X.

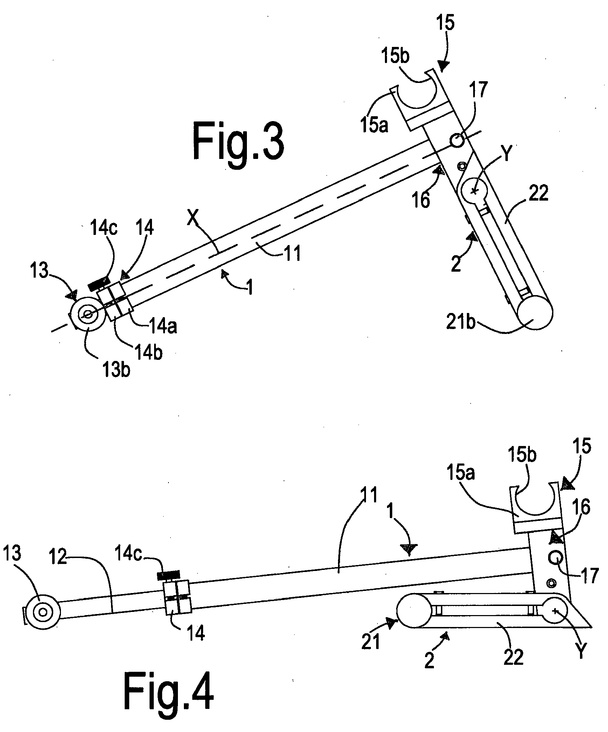

The kick-stand 2 preferably presents a pair of feet 21 a ending in two support terminals 21 b which project symmetrically on two opposite sides. The feet 21 a are in the example an integral part of a single bar 21 which extends orthogonally from a pair of legs 22 connected to the base 16 in a pivotable way. The articulation of the legs 22 and, therefore, of the kick-stand 2 on the whole, to the body 1 is limited, through suitable stops which are not depicted in the figures, between a pulled-in, closed position (figures 1, 2 and 3), approached to the body, and an open position, of maximum projection, wherein the kick-stand is substantially at right angles with respect to the same body (figure 4).

In the closed position, mainly because of the crosswise displacement between the axis Y and the longitudinal axis X, when the accessory is placed on the ground resting on the projections 13b at the first end, and the kick-stand 2 at the second end, the body 1 takes a slightly slating position with respect to the support plane; as a consequence, the two connections, respectively, to the terminal of the fork and to the tube of the bottom bracket, prove to be at different heights (higher at the second end).

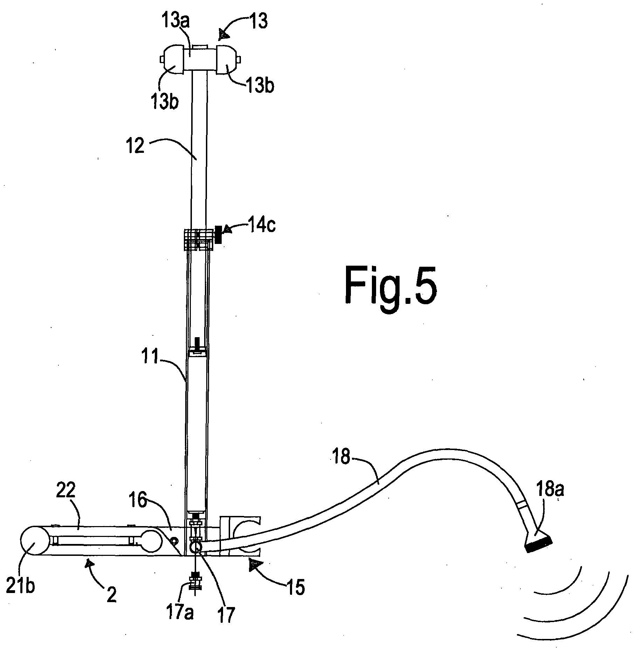

On the other hand, such slant will be much higher when the support on the second end is made on the support terminals 21 b of the feet 21 a of the extracted kick-stand 2, as easily understandable by figure 4. The open or extracted configuration of the kick-stand, on the other hand, allows to keep the accessory with an upright body 1, supported on the base 16 (figure 5) besides on the kick-stand itself. Such configuration is particularly appropriate for the use of the body 1 as pump, by mounting on the air delivery means 17, normally provided with a conventional quick connection plug 17a, an equally conventional tube 18 with at the end a connector 18a to be engaged with an inflation valve for bicycle tires. In such a configuration the locking device 14 will be let loose so as to allow the free reciprocating sliding of the piston 12.

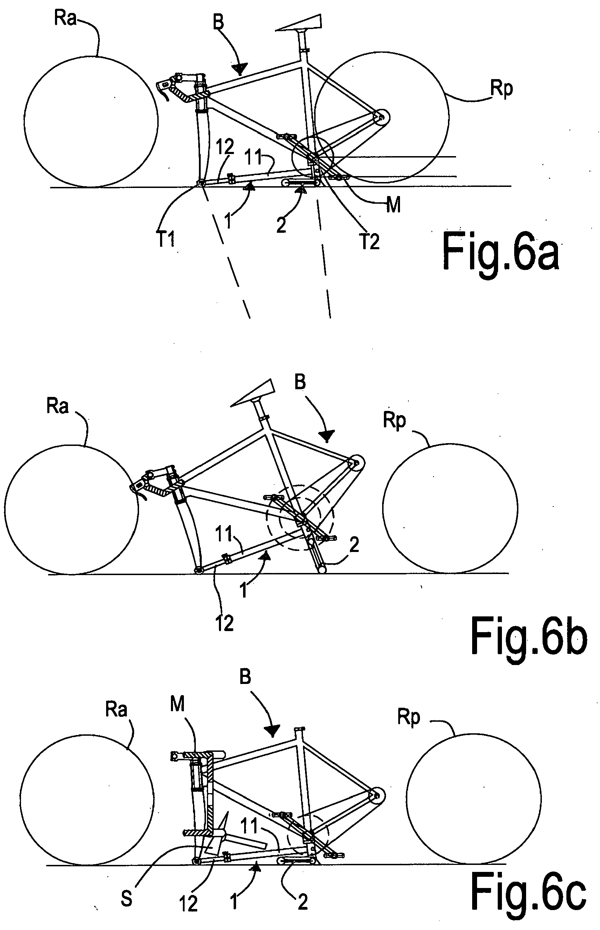

With reference now also to figures from 6a to 6e, the accessory according to the present invention first of all serves the purpose to make the disassembly of a bicycle B easier for its tidy arrangement inside a carrying bag. Figure 6a shows how the body 1 of the accessory is adapted in length along the axis X, by extracting in a controlled way the piston/stem 12 and by stopping it at the desired point, so that the distance between the point of support 13b and the bracket 15 corresponds to the center-to-center distance between the terminal T1 of the fork (rotation axis of the front wheel Ra) and the tube T2 of the movement M (rotation axis of the movement itself). In such a way, once removed the front wheel Ra, the terminal T1 and the tube T2 can be supported on and engaged with, respectively, the first end (grip 13) and the second end (bracket 15) of the body 1. In such a situation, thanks to the stabilization offered by the kick-stand 2 (in a closed configuration), the bicycle stands up autonomously.

Figure 6a represents this very condition. It is apparent that from the displacement of the pivotal axis Y of the kick-stand with respect to the longitudinal axis X, and therefore of the point of support at the second end with respect to the same axis X on which instead the point of support of the body at the first end lies, and from the consequent slant of such axis with respect to the ground plane where the above mentioned support occurs, two advantageous consequences are obtained: the back wheel Rp is at a certain distance with respect to the ground plane, with the possibility of turning the bottom bracket and, therefore, the pedals; and the slanting component of the weight force favors the stability of the engagement between bicycle and accessory, making further stop means superfluous, means which could in any case be provided in the form of clamps to be applied to the terminal of the fork.

Figures 6b and 6c therefore represent how the support exerted by the accessory, once the kick-stand 2 has been unfolded outwards at right angles, and consequently obtained a substantial lifting of the back wheel Rp (figure 6b), allows an easy disassembly of the latter, of the handlebars M and of the saddle S. Once the kick-stand has been brought back to the pulled-in (or folded) position and, therefore, once the accessory has been brought back to a configuration of simple support (figure 6c), the saddle S can also be adjusted by exploiting the support given by the body 1 and the whole set will be easily placed in a carrying bag or suitcase. The accessory will keep its stabilizing function also in such a condition, making the handling of the baggage easier and safer.

At the moment of the re-assembly of the bicycle, it can be easily understood how a sequence of opposite operations is similarly made easier by the accessory which finally can be taken away and used as pump to easily and quickly bring the bicycle back to the best operative conditions. In this respect, it should be considered that normally, while transporting bicycles, it is customary to deflate the tires to decrease their encumbrance and prevent damages (which can also be caused by variations in pressure while traveling by plane).

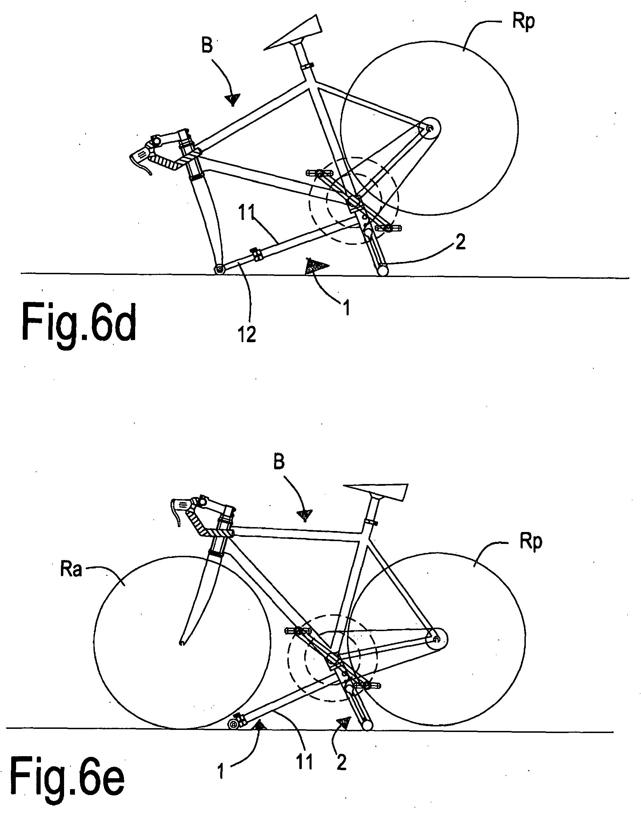

Figures 6d and 6e show how the accessory can also be useful as bicycle support during normal maintenance operations which are not strictly in connection with transport needs. Figure 6d shows a configuration suitable to the maintenance of the whole movement, transmission, gear and back wheel group, since with the first end of the body 1 engaged with the terminal of the fork after the disassembly of the front wheel, and the kick-stand 2 extracted (figure 6d), the lifting of the back wheel is such to allow the free rotation of the movement and of the relating pedals along the complete rotation arch (360°).

Figure 6e also shows the possibility of exploiting only the connection point provided by the bracket 15 on the movement tube. With the kick-stand 2 open at right angles, the first end of the body 1 only performs a ground-resting function, with the front wheel Ra regularly mounted. The accessory is therefore in this case indeed a central kick-stand which, besides holding the bicycle in a parking or garaging position, for the same geometrical characteristics described above keeps one of the wheels (in the figure the back wheel) slightly detached from the ground and, therefore, freely turning, thus making the maintenance or cleaning operations easier. Figure 6e also gives an idea of how the re-insertion of the front wheel in the sequence of re-assembly is made easier since by making the front part of the bicycle - and, as a consequence, the fork - lift, the necessary space for an easy insertion of the wheel will be obtained.

The advantageous prerogatives of the multi-function accessory according to the present invention are therefore apparent. With one device only, having an elementary structure, a low cost and a reduced encumbrance, the invention solves a plurality of problems which can occur during the transport and garaging of the bicycle. The various components can be made in any suitable material, plastic or metallic, with inserts in soft and/or anti-skid material, for example at the points of support on the ground and at the handgrip.

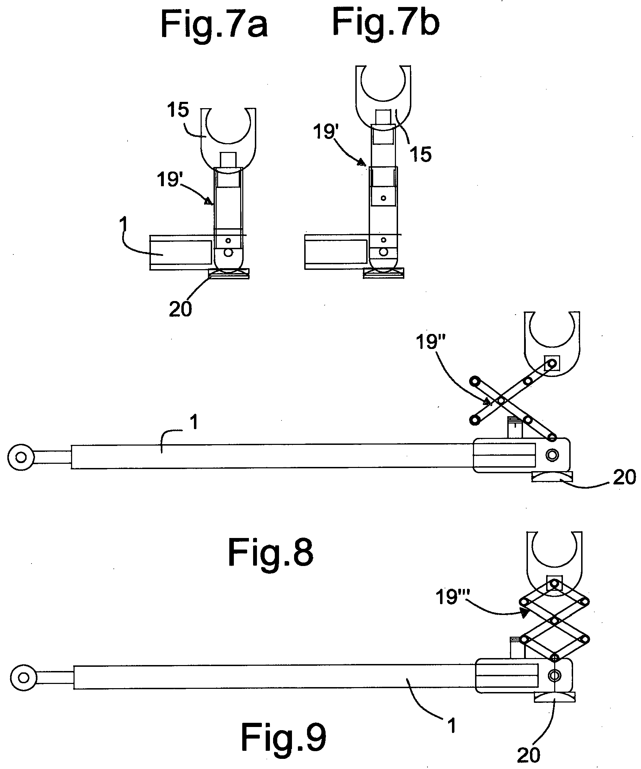

With reference to figures from 7a to 9, in an embodiment outside the scope of the present invention a linearly extractable device, by way of example a telescopic one, can be provided for extraction along a crosswise direction with respect to the axis X. The extractable device, instead of moving the point of contact with the ground of the body 1, making the latter take a slanting configuration such as the one in the previously described embodiment, could also move (lift) crosswise the connection means for connecting to the movement tube, i.e. the bracket 15, with respect to the same body. According to this different solution, as apparent in particular in figures 8 and 9, when destined to the use as bicycle support, the body 1 substantially remains horizontal (or parallel to the ground) and the connection point with the bicycle frame is lifted, with substantially the same result in terms of working position of the bicycle itself.

In figures 7a and 7b, which represent views respectively in the lowered (closed) and in the extracted configurations, the extractable means provide for a telescopic device 19' supporting the bracket. On the contrary, in figures 8 and 9, a plurality of articulated rods form a device 19", 19"', in the shape of a simple lever in the first case and of a pantograph in the second case. With such variants, to assist the stable support of the accessory on the ground, on the second end of the body 1, a support foot 20 is provided, in the opposite position with respect to the bracket 15.

The accessory can also be made dismountable through suitable reversible connections among base, body and kick-stand. The accessory can also be provided in a kit with a bag or suitcase to carry the bicycle, as an independent and separate component, or integrated with a bottom of the bag itself.

The present invention should not be considered as limited to the embodiment described above and depicted in the figures, since it may include different variants thereof within the scope of the attached claims.

## Claims

1. A multi-function bicycle accessory, the bicycle comprising a frame with a connection tube for a bottom bracket and a fork with a connection terminal for connecting to the front wheel, the accessory comprising: an elongated body (1) extensible along a longitudinal axis (X), comprising a first and a second end mutually movable in an adjustable manner; at said first and at said second end of said body, respectively, first and second reversible connection means (13, 15) for connecting respectively to said fork terminal and to said bottom bracket tube, said second connection means (15) defining a connection axis (Y') adapted to coincide or to be arranged parallel to the rotation axis of the bottom bracket when said second end is connected to said tube; and, at said second end, extractable means (2, 19', 19", 19"') associated to said body (1) and adapted to keep said second connection means (15) uplifted with respect to the ground plane when said first end of said body is placed on the same ground plane, wherein said extensible body (1) comprises a fixed portion (11) and a stem (12) sliding along said longitudinal axis (X) with respect to said fixed portion (11), between a completely retracted and a completely extended position, said first and second connection means being respectively defined in correspondence to free ends of said stem and of said fixed portion, **characterized in that** said extractable means are a kick-stand support means pivoted with respect to said fixed portion (11) of said body (1), around a crosswise pivotal axis (Y) parallel to said connection axis (Y') of said second connection means (15), between a pulled-in position towards said body and an open position of maximum projection.

2. The accessory according to claim 1, wherein said second connection means comprise a U-shaped bracket (15) comprising two arms (15a) rising crosswise with respect to said longitudinal axis (X) and shaped in such a way as to define respective seats (15b) adapted to stably engage with said frame tube by way of a slight forcement obtained for elastic deformation of said arms.

3. The accessory according to claim 1 or 2, wherein the connection axis (Y') of said bracket and said pivotal axis (Y) are arranged on opposite sides with respect to said longitudinal axis (X) in a substantially symmetrical fashion.

4. The accessory according to claim 3, wherein said kick-stand (2), in said position of maximum projection, is arranged substantially at right angles with respect to said body and is adapted to lift the back wheel of the bicycle in such a way as to allow the free complete rotation of the bottom bracket.

5. The accessory according to claim 3 or 4, wherein said kick-stand (2) comprises at least one foot (21 a) projecting crosswise with respect to the longitudinal axis (X) of said body.

6. The accessory according to any of the claims from 3 to 5, wherein said kick-stand (2) comprises a couple of feet (21a) ending in two support terminals (21b) and which project symmetrically on two opposite sides from a pair of legs (22) connected to said body in a pivotable manner, the articulation of the legs, and therefore of the kick-stand on the whole, with respect to the body, being limited through stop means between said pulled-in and said open positions.

7. The accessory according to any of the claims from 2 to 6, wherein said U-bolt (15) and said kick-stand (2) are supported at opposite ends of a base (16) which extends crosswise at said second end.

8. The accessory according to any of the previous claims, comprising locking means (14) for locking the sliding of said stem (12) with respect to said fixed portion (11) at a chosen position between said retracted and said extended position.

9. The accessory according to any of previous claims, wherein said extensible body (1) is made of a manually driven piston pump, said stem (12) and said fixed portion (11) respectively representing the piston and the cylinder of said pump, pressurized air delivery means (19) being provided at said second end, pneumatic connection means being further provided in association with the air delivery means for connecting the same to an inflation valve for bicycle tires.

10. The accessory according to any of the previous claims, wherein said first connection means comprise a crossbeam arranged in a T-fashion with respect to said stem (12), with a central cylindrical portion (13a) dimensioned so as to fit in the seats for the hub of the terminal of the bicycle fork, said central portion (13a) being delimited between two mushroom-like projections (13b) which provide for points of support of the accessory on the ground.

11. A kit comprising a bag or a suitcase to carry a bicycle the accessory according to any of the previous claims, and a bag or a suitecase to carry a bicycle.

## Patentansprüche

1. Multifunktionsfahrradzubehör wobei das Fahrrad einen Rahmen mit einem Verbindungsrohr für ein Tretlager und eine Gabel mit einem Verbindungsanschluss zum Verbinden mit dem Vorderrad enthält, wobei das Zubehör enthält: einen längs einer Längsachse (X) streckbaren länglichen Körper (1), der der ein erstes und ein zweites Ende enthält, die gegenseitig in einer einstellbaren Weise beweglich sind; an dem ersten und an dem zweiten Ende des Körpers entsprechend erste und zweite reversible Verbindungseinrichtungen (13, 15) zum Verbinden entsprechend mit dem Gabelanschluss und mit dem Tretlagerrohr, wobei die zweiten Verbindungseinrichtungen (15) eine Verbindungsachse (Y') definieren, die ausgelegt ist, um zusammenzufallen mit oder parallel zu sein zu der Drehachse des Tretlagers, wenn das zweite Ende mit dem Rohr verbunden ist; und an dem zweiten Ende ausziehbare Einrichtungen (2, 19', 19", 19"'), die mit dem Körper (1) verbunden und ausgelegt sind, um die zweiten Verbindungseinrichtungen (15) bezüglich der Bodenebene angehoben zu halten, wenn das erste Ende des Körpers auf der selben Bodenebene platziert ist, wobei der streckbare Körper (1) ein festes Teil (11) und einen Schaft (12) enthält, der sich längs der Längsachse (X) bezüglich dem festen Teil (11) zwischen einer vollständig zurückgezogenen und einer vollständig ausgezogenen Position verschiebt, wobei die ersten und zweiten Verbindungseinrichtungen jeweils entsprechend freien Enden des Schafts und des festen Teils definiert sind, **dadurch gekennzeichnet, dass** die ausziehbaren Einrichtungen Fahrradständer-Halteeinrichtungen sind, die bezüglich dem festen Teil (11) des Körpers (1) um eine quergerichtete Drehachse (Y), die parallel zu der Verbindungsachse (Y') der zweiten Verbindungseinrichtungen (15) ist, zwischen einer zu dem Körper hin eingezogenen Position und einer offenen Position angelenkt ist, in der sie maximal vorstehen.

2. Zubehör nach Anspruch 1, wobei die zweiten Verbindungseinrichtungen eine U-förmige Klammer (15) enthalten, die zwei Arme (15a) enthält, die sich quergerichtet bezüglich der Längsachse (X) und in einer solchen Weise geformt aufrichten, um entsprechende Sitze (15b) zu definieren, die ausgelegt sind, um mit dem Rahmenrohr mittels eines leichten Zwangs, der zur elastischen Verformung der Arme erhalten wird, stabil in Eingriff zu sein.

3. Zubehör nach Anspruch 1 oder 2, wobei die Verbindungsachse (Y') des Lagers und die Drehachse (Y) auf entgegengesetzten Seiten bezüglich der Längsachse (X) in einer im Wesentlichen symmetrischen Weise angeordnet sind.

4. Zubehör nach Anspruch 3, wobei der Fahrradständer (2) in der Position, in der er maximal vorsteht, im Wesentlichen unter rechten Winkeln bezüglich dem Köper angeordnet ist und ausgelegt ist, das hintere Rad des Fahrrads in einer solchen Weise anzuheben, um die freie vollständige Drehung des Tretlagers zuzulassen.

5. Zubehör nach Anspruch 3 oder 4, wobei der Fahrradständer (2) wenigstens einen Fuß (21) enthält, der quergerichtet bezüglich der Längsachse (X) des Körpers vorsteht.

6. Zubehör nach einem der Ansprüche 3 bis 5, wobei der Fahrradständer (2) ein Paar von Füßen (21a) enthält, die in zwei Halteanschlüssen (21b) enden und die symmetrisch auf zwei entgegengesetzten Seiten von einem Paar von Beinen (22) vorstehen, die mit dem Körper in einer drehbaren Weise verbunden sind, wobei die Artikulation der Beine und daher des Fahrradständers insgesamt bezüglich des Körpers durch Stoppeinrichtungen zwischen den eingezogenen und offenen Positionen begrenzt ist.

7. Zubehör nach einem der Ansprüche 3 bis 6, wobei der U-Bolzen (15) und der Fahrradständer (2) an entgegengesetzten Enden einer Basis (16) gehalten sind, die sich quergerichtet an dem zweiten Ende erstreckt.

8. Zubehör nach einem der vorhergehenden Ansprüche, wobei Verriegelungseinrichtungen (14) zum Verriegeln des Verschiebens des Schaftes (12) bezüglich dem festen Teil (11) in einer ausgewählten Position zwischen der zurückgezogenen und der ausgefahrenen Position enthalten sind.

9. Zubehör nach einem der vorhergehenden Ansprüche, wobei der streckbare Körper (1) aus einer manuell betätigten Kolbenpumpe besteht, wobei der Schaft (12) und das feste Teil (11) entsprechend den Kolben und den Zylinder der Pumpe repräsentieren, wobei Druckluftzufuhreinrichtungen (19) an dem zweiten Ende vorgesehen sind, wobei Pneumatikverbindungseinrichtungen ferner in Verbindung mit den Luftzufuhreinrichtungen zur Verbindung derselben mit einem Aufblasventil für Fahrradreifen vorgesehen sind.

10. Zubehör nach einem der vorhergehenden Ansprüche, wobei die ersten Verbindungseinrichtungen einen Querträger enthalten, der in einer T-Weise bezüglich dem Schaft (12) mit einem zentralen Zylinderteil (13a) angeordnet ist, das dimensioniert ist, um in die Sitze für die Nabe des Anschlusses der Fahrradgabel zu passen, wobei das zentrale Teil (13a) zwischen zwei pilzartigen Vorsprüngen (13b) begrenzt ist, die für Haltepunkte des Zubehörs auf dem Boden sorgen.

11. Kit, enthaltend das Zubehör nach einem der vorhergehenden Ansprüche und eine Tasche oder einen Koffer, um ein Fahrrad zu tragen.

## Revendications

1. Un accessoire pour bicyclette multifonction, la bicyclette comportant un cadre avec un tube de connexion pour une bride inférieure et une fourche avec un terminal de connexion pour être relié à la roue avant, l'accessoire comprenant : un corps oblong (1) extensible le long d'un axe longitudinal (X) comprenant une première et seconde extrémités mutuellement mobiles de façon réglable ; sur ladite première et ladite seconde extrémités du dit corps, respectivement, sont prévus des premiers et seconds moyens de connexion réversibles (13, 15) pour la connexion respectivement au dit terminal de la fourche et au dit tube de la bride inférieure, lesdits seconds moyens de connexion (15) définissant un axe de connexion (Y') adapté pour coïncider avec l'axe de rotation de la bride inférieure quand ladite seconde extrémité est connectée au dit tube, ou lui être parallèle ; et, sur ladite seconde extrémité, des moyens extractibles (2, 19', 19", 19") associés au dit corps (1) et adaptés pour maintenir lesdits seconds moyens de connexion (15) debout par rapport au plan du sol quand ladite première extrémité du dit corps est positionnée sur le même plan de sol, dans lequel ledit corps extensible (1) comporte une partie fixe (11) et une tige (12) coulissant le long du dit axe longitudinal (X) par rapport à ladite partie fixe (11), entre une position complètement rentrée et une position complètement sortie, lesdits premiers et seconds moyens de connexion étant respectivement définis en correspondance aux extrémités libres de ladite tige et de ladite partie fixe, **caractérisé en ce que** lesdits moyens extractibles sont des moyens de support béquille montés pivotants par rapport à ladite partie fixe (11) du dit corps (1), autour d'un axe de pivotement transversal (Y) parallèle au dit axe de connexion (Y') des dits seconds moyens de connexion (15), entre une position rentrée vers ledit corps et une position sortie d'éloignement maximum.

2. L'accessoire selon la revendication 1, où lesdits seconds moyens de connexion comportent une bride en forme de U (15) comprenant deux bras (15a) s'étendant transversalement par rapport au dit axe longitudinal (X) et conformés de façon à définir des sièges respectifs (15b) adaptés pour coopérer de façon stable avec ledit tube de cadre avec un léger effort pour obtenir une déformation élastique des dits bras.

3. L'accessoire selon l'une des revendications 1 et 2, où l'axe de connexion (Y') de ladite bride et ledit axe de pivotement (Y) sont agencés sur des côtés opposés par rapport au dit axe longitudinal (X) de façon sensiblement symétrique.

4. L'accessoire selon la revendication 3, où ladite béquille (2), dans ladite position d'avancée maximale, est agencée sensiblement perpendiculairement par rapport au dit corps et adaptée pour soulever la roue arrière de la bicyclette de façon à permettre la rotation complète libre de la bride inférieure.

5. L'accessoire selon l'une des revendications 3 et 4, où ladite béquille (2) comporte au moins un pied (21 a) se projetant transversalement par rapport au dit axe longitudinal (X) du dit corps.

6. L'accessoire selon l'une quelconque des revendications 3 à 5, où ladite béquille (2) comporte deux pieds (21 a) se terminant dans deux terminaux de support (21 b) et qui se projettent symétriquement sur deux bords opposés à partir d'une paire de jambes (22) reliées au dit corps de façon pivotante, l'articulation des jambes, et donc de la béquille dans l'ensemble, par rapport au dit corps, étant limitée par des moyens d'arrêt entre lesdites positions rentrée et sortie.

7. L'accessoire selon l'une quelconque des revendications 2 à 6, où la bride en forme de U (15) et ladite béquille (2) sont supportées sur des extrémités opposées d'une embase (16) qui s'étend transversalement à ladite seconde extrémité.

8. L'accessoire selon l'une quelconque des revendications précédentes, comportant des moyens de blocage (14) pour bloquer le coulissement de ladite tige (12) par rapport à ladite parte fixe (11) dans une position choisie comprise entre lesdites positions rentrée et sortie.

9. L'accessoire selon l'une quelconque des revendications précédentes, où ledit corps extensible (1) est constitué d'une pompe à piston commandée manuellement, ladite tige (12) et ladite partie fixe (11) constituant respectivement le piston et le cylindre de ladite pompe, ladite deuxième extrémité étant munie de moyens d'alimentation en air comprimé (17), des moyens de connexion pneumatiques étant en outre prévu en association avec les moyens d'alimentation en air pour les relier à une valve de gonflage pour pneus de bicyclette.

10. L'accessoire selon l'une quelconque des revendications précédentes, où lesdits moyens de connexion comportent une traverse disposée en T par rapport à ladite tige (12), avec une partie cylindrique centrale (13a) dimensionnée afin de s'enficher dans les sièges du pivot du terminal de la fourche de bicyclette, ladite partie centrale (13a) étant délimitée entre deux projections en forme de champignons (13b) qui constituent des points d'appui de l'accessoire sur le sol.

11. Un kit comprenant l'accessoire selon l'une quelconque des revendications précédentes et un sac ou une valise pour transporter une bicyclette.
